# EUROPÄISCHE PATENTSCHRIFT

(11) **EP 1 428 852 B1**
(45) Veröffentlichungstag und Bekanntmachung des Hinweises auf die Patenterteilung: **25.10.2006**
(21) Anmeldenummer: 03028605.8
(22) Anmeldetag: 12.12.2003
(51) Int. Cl.: C08J 3/24, D04H 1/60, C09J 135/06, C09J 123/22, C09J 125/08, C08K 5/00

(54) **Pulverförmige, formaldehydfreie Bindemittelzusammensetzung und deren Anwendung zum Verbinden von Substraten durch thermisches Härten**
Formaldehyde-free binder composition in powder form and application thereof for bonding substrates by thermal cure
Composition de liant pulvérulent sans formaldéhyde, ainsi que son utilisation pour lier des substrats par réticulation thermique

(30) Priorität: 13.12.2002 DE 10258441
(43) Veröffentlichungstag der Anmeldung: 16.06.2004
(73) Patentinhaber: Basf AG, 67056 Ludwigshafen (DE)
(72) Erfinder: Michl, Kathrin, Dr., 67063 Ludwigshafen (DE); Gerst, Matthias, Dr., 67433 Neustadt (DE); Laubender, Matthias, Dr., 67105 Schifferstadt (DE); Rau, Iris, Dr., 68642 Bürstadt (DE); Reck, Bernd, Dr., 67269 Grünstadt (DE)
(74) Vertreter: Isenbruck, Günter

(56) Entgegenhaltungen:
- DE-A- 19 959 415
- US-A- 3 085 986

## Beschreibung

Die vorliegende Erfindung betrifft eine pulverförmige, formaldehydfreie Bindemittelzusammensetzung insbesondere für fasrige und/oder körnige Substrate.

Gleichermaßen betrifft die vorliegende Erfindung ein Verfahren zum Binden von fasrigen und/oder körnigen Substraten mit Hilfe einer pulverförmigen, formaldehydfreien Zusammensetzung und die nach diesem Verfahren erhältlichen Produkte. Des weiteren hat die vorliegende Erfindung die Verwendung einer pulverförmigen, formaldehydfreien Bindemittelzusammensetzung als Bindemittel für fasrige und/oder körnige Substrate zum Gegenstand.

Unter Bindemitteln versteht man Produkte, die gleich- oder verschiedenartige Stoffe miteinander verbinden. Je nach Struktur unterscheidet man anorganische oder organische bzw. natürliche oder synthetische Bindemittel. Das Abbinden, also das miteinander Verbinden von Stoffen, erfolgt durch physikalisches Trocknen (wässrige oder organische Lösungen, Polymerdispersionen), durch Erstarren oder starken Viskositätsanstieg (schmelzen), durch chemische Reaktion (reaktives System auf Kunststoffbasis; trocknende Öle mit Zusatz von Sikkativen; Carbonatisierung, wie beispielsweise bei Kalkmörtel) oder durch Hydratisierung (hydraulische Bindemittel, Zement). Zahlreiche Bindemittel sind aus dem Stand der Technik bekannt.

Die DE-A 199 59 415 betrifft ein Verfahren zur Vorbindung von Fasermaterialien vorzugsweise aus Glas-, Polyamid- und Kohlenstofffasern durch eine pulverförmige Bindemittelzusammensetzung, die aus einem pulverförmigen Mischpolymerisat und einem pulverförmigen Vernetzer besteht. Das pulverförmige Mischpolymerisat wird durch Emulsionspolymerisation von einem oder mehreren Monomeren aus der Gruppe, umfassend Vinylester, Acrylsäureester, Methacrylsäureester, Vinylaromaten und Vinylchlorid hergestellt. Die pulverförmige Bindemittelzusammensetzung wird mit den zu bindenden Substraten vermischt und erwärmt, wobei die Vorbindung eintritt. Ein Nachteil dieser aus dem Stand der Technik bekannten Bindemittelzusammensetzung besteht darin, dass sie den gebundenen Substraten eine recht geringe mechanische Festigkeit und Formbeständigkeit insbesondere im Feuchtklima verleiht. Darüber hinaus weist das Bindemittel unter wasserfreien Anwendungsbedingungen nur einen geringen Tack auf. Für eine Definition des Tacks wird auf die Druckschrift A. Zosel, E. Wistuba, *J*. *Adhesion SCI Technol*., Vol. 11, 1997, "The Effect of Bond Formation on the Tack of Polymers" verwiesen.

Die EP-A 0 687 317 betrifft die Verwendung von vernetzbaren, redispergierbaren Dispersionspulvem auf der Basis von Vinylester-Copolymerisaten oder (Meth)acrylsäureester-Copolymerisaten als Bindemittel zur Trockenbindung von Fasermaterialien. Als Vernetzer wird ein ethylenisch ungesättigtes, vernetztend wirkendes Comonomer verwendet. Nachteilig bei diesen Bindemittelzusammensetzungen sind die geringe mechanische Festigkeit und Formbeständigkeit insbesondere im Feuchtklima sowie der nicht ausreichende Tack der Bindemittelzusammensetzung.

Der vorliegenden Erfindung liegt somit die Aufgabe zugrunde, pulverförmige, formaldehydfreie Bindemittel für Substrate, wie z. B. Formkörper, bereit zu stellen. Diese Bindemittel sollen sich vorzugsweise für fasrige und/oder körnige Substrate, wie beispielsweise Reisbaumwolle, Naturfasern etc., eignen. Insbesondere sollen die Bindemittel dem gebundenen Produkt eine hohe mechanische Festigkeit und Formbeständigkeit auch im Feuchtklima verleihen. Dabei soll das Bindemittel unter wasserfreien Anwendungsbedingungen einen ausreichenden Tack aufweisen. Außerdem soll das pulverförmige Bindemittel eine hohe Lagerstabilität aufweisen.

Eine weitere Aufgabe der vorliegenden Erfindung besteht darin, ein Verfahren zum Binden von fasrigen und/oder körnigen Substraten bereit zu stellen, bei dem das gebundene Produkt eine hohe mechanische Festigkeit und Formbeständigkeit auch im Feuchtklima erhält. Eine weitere Aufgabe der vorliegenden Erfindung besteht darin, Formkörper bereit zu stellen, die durch Binden von fasrigen und/oder körnigen Substraten hergestellt werden und die eine hohe mechanische Festigkeit und Formbeständigkeit auch im Feuchtklima aufweisen.

Diese Aufgabe wird gelöst durch die Bereitstellung einer pulverförmigen, formaldehydfreien Bindemittelzusammensetzung, enthaltend
a) ein pulverförmiges Copolymer aufgebaut aus Maleinsäureanhydrid und mindestens einem α-Olefin als Komponente A; sowie
b) mindestens einen pulverförmigen Vernetzer, der mindestens zwei reaktive Gruppen aufweist, die mit den Carbonylgruppen des Maleinsäureanhydrids reagieren können, als Komponente B; sowie
c) gegebenenfalls weitere Zusatzstoffe.

Eine weitere Ausführungsform der erfindungsgemäßen pulverförmigen, formaldehydfreien Bindemittelzusammensetzung enthält
a) 40 Gew.-% bis 60 Gew.-%, bezogen auf die Bindemittelzusammensetzung eines pulverförmigen Copolymers aufgebaut aus 25 Mol.-% bis 50 Mol.-%, bezogen auf das Copolymer, Maleinsäureanhydrid, mindestens ein α-Olefin und/oder Styrol als Komponente A'; sowie
b) 40 Gew.-% bis 60 Gew.-%, bezogen auf die Bindemittelzusammensetzung mindestens eines pulverförmigen Vernetzers, der mindestens zwei reaktive Gruppen aufweist, die mit den Carbonylgruppen des Maleinsäureanhydrids reagieren können als Komponente B; sowie
c) gegebenenfalls weitere Zusatzstoffe.

Bei der zweiten Ausführungsform ist bevorzugt, wenn das Copolymer (Komponente A') aus Maleinsäureanhydrid und Styrol aufgebaut ist.

Die erfindungsgemäßen pulverförmigen, formaldehydfreien Bindemittelzusammensetzungen eignen sich insbesondere für fasrige und/oder körnige Substrate. Unter einer Faser wird erfindungsgemäß ein lang gestrecktes Aggregat verstanden. Beispiele für erfindungsgemäß geeignete fasrige Substrate sind Mineral-, Steinwoll-, Glas-, Holz-, Hanf-, Sisal-, Jute-, Flachs-, Textil-, Woll-, Baumwoll-, Cellulose- und synthetische Fasern (z. B. Polyester, Nylon). Beispiele für erfindungsgemäß geeignete körnige Substrate sind Holzschnitzel, Korkgranulat, Sand (Kernsandbindung für Gussformen) und Aluminiumoxide (Schleifmaterialien).

Die erfindungsgemäßen Bindemittel sind pulverförmig, so dass nach dem Binden der insbesondere fasrigen und/oder körnigen Substrate die resultierenden Produkte, insbesondere Formkörper, vorzugsweise nicht mehr getrocknet werden müssen, so wie es bei den wässrigen Bindemittelzusammensetzungen des Standes der Technik der Fall ist. Darüber hinaus enthalten die erfindungsgemäßen Bindemittelzusammensetzungen kein Formaldehyd, so dass bei der Herstellung der gebundenen Produkte als auch bei deren späterem Gebrauch keine Emissionen von Formaldehyd auftreten.

### Komponente A und Komponente A'

Der Anteil an Maleinsäureanhydrid in dem Copolymer (Komponente A) beträgt im Allgemeinen 25 Mol.-% bis 50 Mol.-%, bevorzugt 40 Mol.-% bis 50 Mol.-%, besonders bevorzugt 50 Mol.-%, bezogen auf das Copolymer. Der Anteil an α-Olefin in dem Copolymer (Komponente A) beträgt im Allgemeinen 50 Mol.-% bis 75 Mol.-%, bevorzugt 50 Mol.-% bis 60 Mol.-%, besonders bevorzugt 50 Mol.-%, bezogen auf das Copolymer.

Der Anteil an Maleinsäureanhydrid in dem Copolymer (Komponente A') beträgt im Allgemeinen 25 Mol.-% bis 50 Mol.-%, bevorzugt 40 Mol.-% bis 50 Mol.-%, besonders bevorzugt 50 Mol.-%, bezogen auf das Copolymer. Der Gehalt an α-Olefin und Styrol einerseits oder der Gehalt an α-Olefin oder Styrol andererseits (Komponente A') beträgt im Allgemeinen 50 bis 75 Mol.-%, bevorzugt 50 bis 60 Mol.-%, besonders bevorzugt 50 Mol.-%, bezogen auf das Copolymer.

Die Komponente A der erfindungsgemäßen Bindemittelzusammensetzung umfasst mindestens ein α-Olefin. Die Komponente A der erfindungsgemäßen Bindemittelzusammensetzung kann aber auch mehrere unterschiedliche α-Olefine aufweisen. Erfindungsgemäß geeignete α-Olefine sind im Allgemeinen die C₄- bis C₃₂-α-Olefine, bevorzugt C₄- bis C₁₆-α-Olefine, besonders bevorzugt C₄- bis C₈-α-Olefine, ganz besonders bevorzugt Isobuten und Diisobuten. Entsprechendes gilt für das α-Olefin in der Komponente A'.

Der Anteil des Copolymers (Komponente A) in der erfindungsgemäßen Bindemittelzusammensetzung beträgt im Allgemeinen 5 Gew.-% bis 95 Gew.-%, bevorzugt 40 Gew.-% bis 90 Gew.-%, besonders bevorzugt 40 bis 60 Gew.-%, jeweils bezogen auf die Bindemittelzusammensetzung.

Der Anteil des Copolymers (Komponente A') in der erfindungsgemäßen Bindemittelzusammensetzung beträgt 40 bis 60 Gew.-%, bezogen auf die Bindemittelzusammensetzung.

Der Erweichungspunkt des in der Komponente A verwendeten Copolymers der erfindungsgemäßen Bindemittelzusammensetzung liegt im Allgemeinen zwischen 40 °C und 250 °C, bevorzugt zwischen 70 °C und 220 °C, besonders bevorzugt zwischen 90 °C und 200 °C.

Das zahlenmittlere Molekulargewicht (Mₙ) des Copolymers der Komponente A in der erfindungsgemäßen Bindemittelzusammensetzung liegt im Allgemeinen zwischen 200 g/mol und 50.000 g/mol, bevorzugt zwischen 500 g/mol und 20.000 g/mol, besonders bevorzugt zwischen 3.000 g/mol und 10.000 g/mol. Die Ermittlung von Mₙ erfolgte mittels Gelpermeationschromatographie.

### Komponente B

Geeignete Vernetzer (Komponente B) der erfindungsgemäßen Bindemittelzusammensetzung sind pulverförmige Verbindungen, welche zwei oder mehrere reaktive Gruppen enthalten, die mit den Carbonylgruppen des Maleinsäureanhydrids reagieren können. Geeignet sind hierfür beispielsweise polyfunktionelle Alkohole, polyfunktionelle Amine, Moleküle, die Hydroxyl- und/oder Aminogruppen enthalten, Thiole, hydroxyterminierte Polymere, Epoxide, Isocyanate, Organohalogenverbindungen, Aziridine, Carbodiimide, Oxazoline, Aminosilane und Hydroxyalkylamine.

Der erfindungsgemäß verwendete Vernetzer ist vorzugsweise ausgewählt aus der Gruppe, bestehend aus Trimethylolpropan, 1,6-Hexandiol, Pentaerythrit, Neopentylglykol, L-Lysin, Sorbit und Polyvinylalkohol.

Der Anteil des Vernetzers (Komponente B) in der erfindungsgemäßen Bindemittelzusammensetzung beträgt im Allgemeinen 5 Gew.-% bis 95 Gew.-%, bevorzugt 10 Gew.-% bis 60 Gew.-%, besonders bevorzugt 40 bis 60 Gew.-%, jeweils bezogen auf die Bindemittelzusammensetzung.

Der Schmelz- bzw. Erweichungspunkt des Vernetzers (Komponente B) liegt im Allgemeinen zwischen 40 °C und 270 °C, bevorzugt zwischen 70 °C und 220 °C, besonders bevorzugt zwischen 90 °C und 200 °C.

Die pulverförmige Bindemittelzusammensetzung kann gegebenenfalls zusätzlich mindestens einen Vernetzungskatalysator enthalten. Hierbei handelt es sich vorzugsweise um einen sauren Katalysator oder eine Lewissäure. Der erfindungsgemäß verwendete Katalysator ist vorzugsweise para-Toluolsulfonsäure. Weitere erfindungsgemäße Vernetzungskatalysatoren sind Katalysatoren auf der Basis von organischen Verbindungen, welche quarternäre Gruppen von Elementen der 5. Hauptgruppe des PSE enthalten. Bevorzugt sind pulverförmige Katalysatoren, welche sich von Triphenylphosphoniumhalogeniden oder quartemären Ammoniumverbindungen ableiten. Beispiele hierfür sind Methyl-, Ethyl-, Propyl-, Butyl-Triphenylphosphoniumbromid bzw. die entsprechenden Iodide und Chloride. Geeignet sind auch Triphenylphosphoniumhalogenide mit substituiertem Alkylrest wie 2-Carboxyethyl-, 3-Bromopropyl- oder Formylmethyl-Triphenylphosphoniumbromid. Geeignete quarternäre Ammoniumverbindungen sind Tetrabutylammonium-, Benzyltrimethylammonium-, Methyltributylammonium-Salze. Wenn ein Vernetzungskatalysator in der erfindungsgemäßen Bindemittelzusammensetzung enthalten ist, so ist er im Allgemeinen in Mengen von 0 bis 10 Gew.-%, bevorzugt 0,1 bis 5 Gew.-%, besonders bevorzugt 0,2 bis 3 Gew.-%, bezogen auf die erfindungsgemäße Bindemittelzusammensetzung, enthalten.

### Komponente C

Die erfindungsgemäße Bindemittelzusammensetzung kann gegebenenfalls zusätzlich als Komponente C weitere Zusatzstoffe enthalten. Hierzu zählen insbesondere Antiblockmittel, Antischaummittel, Emulgatoren, Farbstoffe, Flammschutzmittel, Füllstoffe, Fungizide, Haftmittel, Hydrophobierungsmittel, Insektizide, Katalysatoren, Pigmente, Rheologiehilfsmittel, Verdickungsmittel, Verfilmungsmittel, Weichmacher und Zusatzvernetzer. Die Komponente C kann in einer Menge von im Allgemeinen 0 bis 30 Gew.-%, bevorzugt 2 bis 20 Gew.-%, besonders bevorzugt 5 bis 10 Gew.-%, bezogen auf die erfindungsgemäße Bindemittelzusammensetzung, enthalten sein.

### Bindemittelzusammensetzung

In der erfindungsgemäßen Bindemittelzusammensetzung beträgt die Differenz zwischen dem Erweichungspunkt des Copolymers (Komponente A) und dem Schmelz- bzw. Erweichungspunkt des Vernetzers (Komponente B) im Allgemeinen weniger als 250 °C, bevorzugt weniger als 200 °C, besonders bevorzugt weniger als 180 °C.

In einer bevorzugten Ausführungsform der erfindungemäßen Bindemittelzusammensetzung verringert sich das Speichermodul G' während des Aufheizens von im Allgemeinen 50 °C auf 300 °C, bevorzugt 50 °C bis 250 °C, besonders bevorzugt 80 °C bis 250 °C, zunächst mindestens einmal auf einen Wert ≤ 10⁸ Pa, vorzugsweise ≤ 10⁷ Pa, insbesondere ≤ 10⁶ Pa, und erhöht sich danach wieder. Das Speichermodul G' wird mittels rheologischer Untersuchungen ermittelt, die in A. Franck, *Kunststoff Kompendium,* Vogel Buchverlag, 4. Auflage, 1996, S. 253 ff. beschrieben sind.

Ein weiterer Gegenstand der vorliegenden Erfindung ist ein Verfahren zum Binden von fasrigen und/oder körnigen Substraten. Dabei wird eine pulverförmige, formaldehydfreie Bindemittelzusammensetzung mit fasrigen und/oder körnigen Substraten vermischt. Vorzugsweise unter Temperaturerhöhung und gegebenenfalls unter Zusatz eines Vemetzungskatalysators werden die Substrate dann durch die erfindungsgemäße Bindemittelzusammensetzung gebunden. Von Vorteil ist bei diesem Verfahren insbesondere, dass kein Lösemittel, wie beispielsweise Wasser, für das Binden von Substraten benötigt wird, so dass ein anschließendes Trocknen der gebundenen Substrate vorzugsweise nicht notwendig ist.

Bezüglich der fasrigen und/oder körnigen Substrate, die durch das erfindungsgemäße Verfahren gebunden werden können, wird auf obige Ausführung bezüglich der erfindungsgemäßen Bindemittelzusammensetzung verwiesen.

Bei dem Vernetzungskatalysator handelt es sich vorzugsweise um einen sauren Katalysator oder eine Lewissäure. Der erfindungsgemäß verwendete Katalysator ist vorzugsweise para-Toluolsulfonsäure. Weitere erfindungsgemäß zu verwendende Vernetzungskatalysatoren sind Katalysatoren auf der Basis von organischen Verbindungen, welche quarternäre Gruppen von Elementen der 5. Hauptgruppe des PSE enthalten. Bevorzugt sind pulverförmige Katalysatoren, welche sich von Triphenylphosphoniumhalogeniden oder quarternären Ammoniumverbindungen ableiten. Beispiele hierfür sind Methyl-, Ethyl-, Propyl-, Butyl-Triphenylphosphoniumbromid bzw. die entsprechenden Iodide und Chloride. Geeignet sind auch Triphenylphosphoniumhalogenide mit substituiertem Alkylrest wie 2-Carboxyethyl-, 3-Bromopropyl- oder Formylmethyl-Triphenylphosphoniumbromid. Geeignete quarternäre Ammoniumverbindungen sind Tetrabutylammonium-, Benzyltrimethylammonium-, Methyltributylammonium-Salze.

Vor der Verfestigung werden die fasrigen und/oder körnigen Substrate, die auch dreidimensionale Formen aufweisen können, ausgelegt. Die Verfahren hierzu sind bekannt und in erster Linie von der Anwendung, in der das verfestigte fasrige und/oder körnige Substrat eingesetzt wird, abhängig. Die fasrigen und/oder körnigen Substrate können mittels einer Mischung und darüber hinaus auch mit weiteren Techniken wie Luftlege-, Nasslege-, Direktspinn- oder Krempelvorrichtung ausgelegt werden. Gegebenenfalls können die in Form von Flächengebilden ausgelegten Substrate von der Verfestigung mit Bindemittel noch mechanisch verfestigt werden, beispielsweise durch Kreuzlegen, Nadeln oder Wasserstrahlverfestigung.

Bei dem erfindungsgemäßen Verfahren wird die formaldehydfreie, pulverförmige Bindemittelzusammensetzung in an sich bekannter Weise auf das, gegebenenfalls mechanisch vorverfestigte fasrige und/oder körnige Substrat aufgestreut, eingestreut (beispielsweise durch Krempelwatten), eingerüttelt oder direkt mit der Faser vermischt.

Bei dem erfindungsgemäßen Verfahren müssen Bindezeit und -temperatur an das System aus Substrat und Bindemittel angepasst werden. So kann das erfindungsgemäße Verfahren für ein bestimmtes System beispielsweise für 1 h bei 230° C oder aber für 24 h bei 120° C durchgeführt werden. Erfindungsgemäß ist also vorgesehen, dass Bindezeit und - temperatur in gegenseitiger Abhängigkeit variiert werden können.

Die Menge an erfindungsgemäßer Bindemittelzusammensetzung, die im erfindungsgemäßen Verfahren verwendet wird, beträgt im Allgemeinen 5 bis 70 Gew.-%, bevorzugt 10 bis 60 Gew.-%, besonders bevorzugt 15 bis 50 Gew.-%, jeweils bezogen auf das Substrat.

Gegenstand der vorliegenden Erfindung sind auch die nach dem erfindungsgemäßen Verfahren herstellbaren aus fasrigen und/oder körnigen Substraten bestehenden Produkte, insbesondere Formkörper. Diese Formkörper weisen eine hohe mechanische Festigkeit und Formbeständigkeit insbesondere im Feuchtklima auf.

Ein weiterer Gegenstand der vorliegenden Erfindung sind auch die Verwendungen bzw. Anwendungen der erfindungsgemäßen formaldehydfreien, pulverförmigen Bindemittelzusammensetzung insbesondere für fasrige und/oder körnige Substrate.

Bezüglich der fasrigen und/oder körnigen Substrate wird auf obige Ausführung verwiesen.

Die vorliegende Erfindung zeigt eine Reihe von Vorteilen gegenüber dem Stand der Technik:

So eignet sich die erfindungsgemäßen Bindemittelzusammensetzung insbesondere für fasrige und/oder körnige Substrate. Die erfindungsgemäße Bindemittelzusammensetzung ist formaldehydfrei, so dass weder die Bindemittelzusammensetzung an sich noch die mit ihr hergestellten, gebundenen Produkte, insbesondere Formkörper, unter Feuchtigkeits- und/oder Wärmeeinwirkung Formaldehyd abgeben. Die erfindungsgemäßen Bindemittelzusammensetzungen verleihen dem gebundenen Produkt eine hohe mechanische Festigkeit und Formbeständigkeit. Dieses gilt insbesondere im Feuchtklima. Die erfindungsgemäße Bindemittelzusammensetzung weist unter wasserfreien Anwendungsbedingungen einen hervorragenden Tack auf.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die Erfindung jedoch keinesfalls beschränken.

### Ausführungsbeispiele

### Allgemeines

### Dynamisch-mechanische Messungen:

Die Messungen des Speichermoduls G' erfolgten mit einem deformationsgesteuerten modularen Rheometersystem der Firma Rheometrics Inc., Typ ARES. Dabei wurde ein Kraftaufnehmer von Typ 2K FRTN1 verwendet. Messanordnung: Parallel-Platte-Geometrie, Plattendurchmesser: 25 mm, Probendicke ca. 1 mm. Das Speichermodul G' wurde in Abhängigkeit von der Temperatur gemessen, wobei die Messfrequenz 1 Hz und die Heizrate 1 °C/Minute betrug. Die Menge an erfindungsgemäßer Bindemittelzusammensetzung, die im erfindungsgemäßen Verfahren verwendet wird, beträgt im Allgemeinen 5 bis 70 Gew.-% bevorzugt 5 bis 60 Gew.- %, besonders bevorzugt 5 bis 50 Gew. %, bezogen auf das Substrat.

### Gelpermeationschromatographie:

Es wurde eine Kombination aus 4 Trennsäulen (innerer Durchmesser jeweils 7.8 mm Länge jeweils 30 cm, Säulentemperatur jeweils 35 °C) mit folgenden Trennmaterialien verwendet:

| Säule-Nr. | Trennmaterial | Ausschlußgrenze Polyethylenoxid |
|---|---|---|
| 1 | TSK G5000 PW xl | 4.000 - 1.000.000 |
| 2 | Waters Ultrahydrogel 1.000 | 1.000.000 |
| 3 | Waters Ultrahydrogel 500 | 400.000 |
| 4 | Waters Ultrahydrogel 500 | 400.000 |

Als Elutionsmittel wurde 0.008 m TRIS-Puffer (Tris-(hydroxymethyl)aminomethan, Merck, Darmstadt) bei pH = 7 in destilliertem Wasser unter Zusatz von 0. 15 mol/L NaCl und 0.01 mol/L NaN₃ eingesetzt.

Es wurden jeweils 400 µL der Probenlösung injiziert.

Die Durchflussgeschwindigkeit betrug 0.5 mL/min. Die Bodenzahl der Trennsäulen-Kombination bei dieser Durchflussgeschwindigkeit betrug 37.000.

Als Detektor wurde ein Differentialrefraktometer ERC 7510 der Fa. ERMA verwendet.

Die Auswertung wurde nach einem Durchflussvolumen von 39.6 mL (M(Na-PAA) ca. 642) abgebrochen (Integrationsgrenze). Die Integration der erhaltenen Chromatogramme erfolgte in Anlehnung an DIN 55672-1 mit einer Genauigkeit von ± 3%.

### Vergleichsbeispiel

Als Vergleichsbindemittel wurde Vinnex® LL572 von Wacker Polymer Systems GmbH verwendet. Vinnex® LL572 ist ein selbstvernetzendes Bindepulver auf Basis von Polyvinylacetat, welches zum Binden von Glas-, Natur- und Polyesterfasern empfohlen wird. Auf der Index 99 wurde Vinnex® LL572 als Bindemittel für Reißbaumwolle vorgestellt (Literatur: Index 99, 1999, Kohlhammer, "Dry Emulsion Binders").

### Beispiel 1

Es wurde eine Bindemittelzusammensetzung aufgebaut aus 50 Gew.-% Maleinsäureanhydrid/Styrol-Copolymer (Molverhältnis = 1:3) und 50 Gew.-% Pentaerythrit als Vernetzer hergestellt.

### Beispiel 2

Es wurde eine Bindemittelzusammensetzung aufgebaut aus 50 Gew.-% Maleinsäureanhydrid/Isobuten-Copolymer (Molverhältnis = 1:1) und 50 Gew.-% Trimethylolpropan als Vernetzer hergestellt.

### Beispiel 3

Es wurde eine Bindemittelzusammensetzung aufgebaut aus 50 Gew.-% Maleinsäureanhydrid/Diisobuten-Copolymer (Molverhältnis = 1:1) und 50 Gew.-% Primid XL 552 (Bisdiethanolamid der Adipinsäure) als Vernetzer hergestellt.

Alle vier Bindemittelzusammensetzungen wurden bezüglich ihrer Festigkeit und ihrer Durchbiegung unter unterschiedlichen Umgebungsbedingungen und unterschiedlicher Zeitdauer mit Schulnoten bewertet. Bei allen vier Beispielen wurde Reißbaumwolle als Substrat gebunden.

| Parameter | Vergleichsbsp. 1 | Beispiel 1 | Beispiel 2 | Beispiel 3 |
|---|---|---|---|---|
| Preßtemperatur [°C] | 200 | 200 | 200 | 200 |
| Preßzeit [sec] | 40/10/130* | 40/10/130* | 40/10/130* | 40/10/130* |
| Preßdruck [bar] | 50/0/200^{#} | 50/0/200^{#} | 50/0/200^{#} | 50/0/200^{#} |
| Plattendicke [mm] | 5,4 | 5.5 | 5.4 | 5.6 |
| Festigkeitsbeurteilung nach Verpressen [Note 1-6] | 6 | 1- | 1- | 1- |
| Festigkeitsbeurteilung nach 3 d, 120 °C [Note 1-6] | 6 | 1- | 1- | 1- |
| Festigkeitsbeurteilung nach 3 d, 50 °C, 95% Luftfeuchtigkeit [Note 1-6] | 6 | 1- | 3 | 2 |
| Beurteilung der Durchbiegung, 1 d, 120 °C, [mm] | 6** | 1.5 | 2 | 2 |
| Beurteilung der Durchbiegung, 1 d, 50 °C, 95 % Luftfeuchtigkeit, [mm] | 6** | 2 | 5.5 | 5.5 |

| | | | | |
|---|---|---|---|---|
| *Programm: 40 sec Anpressen/ 10 sec offene Presse/ 130 sec Pressen ^{#}Programm: bei 50 bar Anpressen/ 0 bar offene Presse/ bei 200 bar Pressen ** das Material ist extrem weich | | | | |

Wie aus der Tabelle ersichtlich, weisen die erfindungsgemäßen Bindemittelzusammensetzungen gute bis sehr gute Festigkeits- und Durchbiegungswerte auf, während es bei der Zusammensetzung des Vergleichsbeispiels zu keiner Bindung kommt.

## Patentansprüche

1. Pulverförmige, formaldehydfreie Bindemittelzusammensetzung, insbesondere für fasrige und/oder körnige Substrate, enthaltend
a) ein pulverförmiges Copolymer aufgebaut aus Maleinsäureanhydrid und mindestens einem α-Olefin als Komponente A; sowie
b) mindestens einen pulverförmigen Vernetzer, der mindestens zwei reaktive Gruppen aufweist, die mit den Carbonylgruppen des Maleinsäureanhydrids reagieren können, als Komponente B; sowie
c) gegebenenfalls weitere Zusatzstoffe.

2. Bindemittelzusammensetzung nach Anspruch 1, **dadurch gekennzeichnet, dass** der Anteil an Maleinsäureanhydrid in dem Copolymer bis zu 50 Gew.-%, bezogen auf das Copolymer, beträgt.

3. Pulverförmige, formaldehydfreie Bindemittelzusammensetzung, insbesondere für fasrige und/oder körnige Substrate, enthaltend
a) 40 Gew.-% bis 60 Gew.-%, bezogen auf die Bindemittelzusammensetzung, eines pulverförmigen Copolymers aus 25 Mol.-% bis 50 Mol.-%, bezogen auf das Copolymer, Maleinsäureanhydrid, mindestens ein α-Olefin und/oder Styrol als Komponente A'; sowie
b) 40 Gew.-% bis 60 Gew.-%, bezogen auf die Bindemittelzusammensetzung, mindestens eines pulverförmigen Vernetzers, der mindestens zwei reaktive Gruppen aufweist, die mit den Carbonylgruppen des Maleinsäureanhydrids reagieren können, als Komponente B; sowie
c) gegebenenfalls weitere Zusatzstoffe.

4. Bindemittelzusammensetzung nach einem der Ansprüche 1 bis 3, **dadurch gekennzeichnet, dass** das α-Olefin ein C₄- bis C₃₂-α-Olefine, bevorzugt C₄- bis C₁₆-α-Olefine, besonders bevorzugt C₄- bis C₈-α-Olefine, ganz besonders bevorzugt Isobuten und Düsobuten, ist.

5. Bindemittelzusammensetzung nach einem der Ansprüche 1 bis 4, **dadurch gekennzeichnet, dass** der Erweichungspunkt des Copolymers zwischen 40 °C und 250 °C, bevorzugt zwischen 70 °C und 220 °C, besonders bevorzugt zwischen 90 °C und 200 °C, liegt.

6. Bindemittelzusammensetzung nach einem der Ansprüche 1 bis 5, **dadurch gekennzeichnet, dass** das zahlenmittlere Molekulargewicht (Mn) des Copolymers zwischen 200 g/mol und 50.000 g/mol, bevorzugt 500 g/mol und 20.000 g/mol, besonders bevorzugt zwischen 3.000 g/mol und 10.000 g/mol, liegt.

7. Bindemittelzusammensetzung nach einem der Ansprüche 1 bis 6, **dadurch gekennzeichnet, dass** der Vernetzer ausgewählt ist aus der Gruppe, bestehend aus polyfunktionellen Alkoholen, polyfunktionellen Aminen, Molekülen, die Hydroxyl- und/oder Aminogruppen enthalten, Thiolen, hydroxyterminierten Polymeren, Epoxiden, Isocyanaten, Organohalogenverbindungen, Aziridinen, Carbodiimiden, Oxazolinen, Aminosilanen und Hydroxylalkylaminen.

8. Bindemittelzusammensetzung nach einem der Ansprüche 1 bis 7, **dadurch gekennzeichnet, dass** der Schmelz- bzw. Erweichungspunkt des Vernetzers zwischen 40 °C und 270 °C, bevorzugt zwischen 70 °C und 220 °C, besonders bevorzugt zwischen 90 °C und 200 °C, liegt.

9. Bindemittelzusammensetzung nach einem der Ansprüche 1 bis 8, **dadurch gekennzeichnet, dass** die Zusammensetzung weitere Zusatzstoffe, insbesondere Antiblockmittel, Antischaummittel, Emulgatoren, Farbstoffe, Flammschutzmittel, Füllstoffe, Fungizide, Haftmittel, Hydrophobierungsmittel, Insektizide, Katalysatoren, Pigmente, Rheologiehilfsmittel, Verdickungsmittel, Verfilmungsmittel, Weichmacher und Zusatzvernetzer, enthält.

10. Bindemittelzusammensetzung nach einem der Ansprüche 1 bis 9, **dadurch gekennzeichnet, dass** die Differenz zwischen dem Erweichungspunkt des Copolymers und dem Schmelz- bzw. Erweichungspunkt des Vernetzers im Allgemeinen weniger als 250 °C, bevorzugt weniger als 200 °C, besonders bevorzugt weniger als 180 °C, ist.

11. Bindemittelzusammensetzung nach einem der Ansprüche 1 bis 10, **dadurch gekennzeichnet, dass** das Speichermodul G' während des Aufheizens von 50 °C bis 300 °C, bevorzugt 50 °C bis 250 °C, besonders bevorzugt 80 °C bis 250 °C, sich zunächst mindestens einmal auf einen Wert ≤ 10⁸ Pa, bevorzugt ≤ 10⁷ Pa, besonders bevorzugt ≤ 10⁶ Pa, verringert und sich danach wieder erhöht.

12. Verfahren zum Binden von fasrigen und/oder körnigen Substraten, wobei eine pulverförmige, formaldehydfreie Bindemittelzusammensetzung nach einem der Ansprüche 1 bis 11 mit fasrigen und/oder körnigen Substraten vermischt wird und diese gegebenenfalls unter Zusatz mindestens eines Katalysators vorzugsweise unter Temperaturerhöhung bindet.

13. Verfahren nach Anspruch 12, **dadurch gekennzeichnet, dass** als Katalysator ein saurer Katalysator, vorzugsweise para-Toluolsulfonsäure, oder eine Lewissäure verwendet wird.

14. Verfahren nach Anspruch 12 oder 13, **dadurch gekennzeichnet, dass** das fasrige und/oder körnige Substrat ausgewählt ist aus der Gruppe, bestehend aus Steinwollfasern, Mineralfasern, Glasfasern, Holzfasern, Hanffasern, Sisalfasern, Jutefasern, Flachsfasern, Textilfasern, Wollfasern, Baumwollfasern, Cellulosefasern und synthetischen Fasern, insbesondere Polyester und Nylon, Holzschnitzeln, Korkgranulat, Sand, insbesondere Kernsand für Gussformen, Aluminiumoxide, insbesondere Schleifmaterialien.

15. Produkte, insbesondere Formkörper, erhältlich durch das Verfahren gemäß einem der Ansprüche 12 bis 14.

16. Verwendung einer pulverförmigen Bindemittelzusammensetzung nach einem der Ansprüche 1 bis 11 als Bindemittel für fasrige und/oder körnige Substrate.

17. Verwendung nach Anspruch 16, **dadurch gekennzeichnet, dass** das fasrige und/oder körnige Substrat ausgewählt ist aus der Gruppe, bestehend aus Steinwollfasern, Mineralfasern, Glasfasern, Holzfasern, Hanffasern, Sisalfasern, Jutefasern, Flachsfasem, Textilfasern, Wollfasern, Baumwollfasern, Cellulosefasern und synthetischen Fasern, insbesondere Polyester und Nylon, Holzschnitzeln, Korkgranulat, Sand, insbesondere Kernsand für Gussformen, Aluminiumoxide, insbesondere Schleifmaterialien.

## Claims

1. A pulverulent formaldehyde-free binder composition, especially for fibrous and/or granular substrates, comprising
a) a pulverulent copolymer polymerized from maleic anhydride and at least one α-olefin as component A; and also
b) at least one pulverulent crosslinker which has two or more reactive groups capable of reacting with the carbonyl groups of maleic anhydride, as component B; and also
c) if appropriate further additive materials.

2. The binder composition according to claim 1 wherein the maleic anhydride fraction in the copolymer is up to 50% by weight, based on the copolymer.

3. A pulverulent formaldehyde-free binder composition, especially for fibrous and/or granular substrates, comprising
a) 40 to 60% by weight, based on the binder composition, of a pulverulent copolymer formed from 25 mol% to 50 mol%, based on the copolymer, of maleic anhydride, at least one α-olefin and/or styrene as component A'; and
b) 40 to 60% by weight, based on the binder composition, of at least one pulverulent crosslinker which has two or more reactive groups capable of reacting with the carbonyl groups of maleic anhydride, as component B; and also
c) if appropriate further additive materials.

4. The binder composition according to any of claims 1 to 3 wherein the α-olefin is a C₄- to C₃₂-α-olefin, preferably C₄- to C₁₆-α-olefin, more preferably C₄- to C₈-α-olefin and most preferably isobutene and diisobutene.

5. The binder composition according to any of claims 1 to 4 wherein the softening point of the copolymer is between 40°C and 250°C, preferably between 70°C and 220°C and more preferably between 90°C and 200°C.

6. The binder composition according to any of claims 1 to 5 wherein the number average molecular weight (Mn) of the copolymer is between 200 g/mol and 50 000 g/mol, preferably 500 g/mol and 20 000 g/mol and more preferably between 3000 g/mol and 10 000 g/mol.

7. The binder composition according to any of claims 1 to 6 wherein the crosslinker is selected from the group consisting of polyfunctional alcohols, polyfunctional amines, molecules which comprise hydroxyl and/or amino groups, thiols, hydroxyl-terminated polymers, epoxides, isocyanates, organohalogen compounds, aziridines, carbodiimides, oxazolines, aminosilanes and hydroxylalkylamines.

8. The binder composition according to any of claims 1 to 7 wherein the melting or softening point of the crosslinker is between 40 and 270°C, preferably between 70°C and 220°C and more preferably between 90°C and 200°C.

9. The binder composition according to any of claims 1 to 8 wherein the composition comprises further additive materials, especially antiblocking agents, antifoaming agents, emulsifiers, dyes, flame retardants, fillers, fungicides, coupling agents, hydrophobicizers, insecticides, catalysts, pigments, rheological assistants, thickeners, filming agents, plasticizers and cocrosslinkers.

10. The binder composition according to any of claims 1 to 9 wherein the difference between the softening point of the copolymer and the melting or softening point of the crosslinker is generally less than 250°C, preferably less than 200°C and more preferably less than 180°C.

11. The binder composition according to any of claims 1 to 10 wherein the storage modulus G' initially decreases at least once to a value ≤ 10⁸ Pa, preferably ≤ 10⁷ Pa and more preferably ≤ 10⁶ Pa, and then rises again, on heating from 50°C to 300°C, preferably from 50°C to 250°C and more preferably 80°C to 250°C.

12. A process for binding fibrous and/or granular substrates, which comprises a pulverulent formaldehyde-free binder composition according to any of claims 1 to 11 being mixed with fibrous and/or granular substrates and binding the latter preferably by heating in the presence or absence of at least one catalyst.

13. The process according to claim 12 wherein the catalyst used is an acidic catalyst, preferably para-toluenesulfonic acid, or a Lewis acid.

14. The process according to claim 12 or 13 wherein the fibrous and/or granular substrate is selected from the group consisting of rockwool fibers, mineral fibers, glass fibers, wood fibers, hemp fibers, sisal fibers, jute fibers, flax fibers, textile fibers, wool fibers, cotton fibers, cellulose fibers and synthetic fibers, especially polyester and nylon, wood chips, cork granules, sand, especially core sand for casting molds, aluminum oxides, especially abrasive materials.

15. Products, especially shaped articles, obtainable by the process according to any of claims 12 to 14.

16. The use of the pulverulent binder composition according to any of claims 1 to 11 as a binder for fibrous and/or granular substrates.

17. The use according to claim 16 wherefor the fibrous and/or granular substrate is selected from the group consisting of rockwool fibers, mineral fibers, glass fibers, wood fibers, hemp fibers, sisal fibers, jute fibers, flax fibers, textile fibers, wool fibers, cotton fibers, cellulose fibers and synthetic fibers, especially polyester and nylon, wood chips, cork granules, sand, especially core sand for casting molds, aluminum oxides, especially abrasive materials.

## Revendications

1. Composition de liant sans formaldéhyde, en poudre, en particulier pour substrats fibreux et/ou granuleux, contenant :
a) un copolymère en poudre réalisé à partir d'un anhydride d'acide maléique et d'au moins une α-oléfine, en tant que composant A; ainsi que
b) au moins un réticulant en poudre, présentant au moins deux groupes réactifs pouvant réagir avec les groupes carbonyle de l'anhydride d'acide maléique, en tant que composant B; ainsi que
c) le cas échéant, d'autres matières additionnelles.

2. Composition de liant selon la revendication 1, **caractérisée en ce que** la part de l'anhydride d'acide maléique dans le copolymère, par rapport au copolymère, atteint jusqu'à 50 % en poids.

3. Composition de liant sans formaldéhyde, en poudre, en particulier pour substrats fibreux et/ou granuleux, contenant :
a) 40 à 60 % en poids, par rapport au composé de liant, d'un copolymère en poudre, de 25 à 50 % en moles, par rapport au copolymère, d'anhydride d'acide maléique, au moins une α-oléfine et/ou du styrène en tant que composant A; ainsi que
b) 40 à 60 % en poids, par rapport à la composition de liant, d'au moins un réticulant en poudre, présentant au moins deux groupes réactifs pouvant réagir avec les groupes carbonyle de l'anhydride d'acide maléique, en tant que composant B; ainsi que
c) le cas échéant, d'autres matières additionnelles.

4. Composition de liant selon l'une quelconque des revendications 1 à 3, **caractérisée en ce que** la α-oléfine est une α-oléfine en C₄ à C₃₂, de préférence une α-oléfine en C₄ à C₁₆, de manière plus préférée une α-oléfine en C₄ à C₈, de la manière la plus préférée de l'isobutène ou du diisobutène.

5. Composition de liant selon l'une quelconque des revendications 1 à 4, **caractérisée en ce que** le point de ramollissement du copolymère se trouve entre 40°C et 250°C, de préférence entre 70°C et 220°C, de manière plus préférée entre 90°C et 200°C.

6. Composition de liant selon l'une quelconque des revendications 1 à 5, **caractérisée en ce que** le chiffre moyen du poids moléculaire (Mn) du copolymère se trouve entre 200 g/mole et 50 000 g/mole, de préférence entre 500 g/mole et 20 000 g/mole, de manière plus préférée entre 3 000 g/mole et 10 000 g/mole.

7. Composition de liant selon l'une quelconque des revendications 1 à 6, **caractérisée en ce que** le réticulant est choisi dans la groupe incluant les alcools polyfonctionnels, les amines polyfonctionnelles, les molécules qui contiennent des hydroxyles et/ou des groupes amino, les thiols, les polymères à terminaison hydroxy, les époxydes, les isocyanates, les composés halogènes organiques, les aziridines, les carbodiimides, les oxazolines, les aminosilanes et les hydroxylalkylamines.

8. Composition de liant selon l'une quelconque des revendications 1 à 7, **caractérisée en ce que** le point de fusion ou de ramollissement du réticulant se trouve entre 40°C et 270°C, de préférence entre 70°C et 220°C, de manière plus préférée entre 90°C et 200°C.

9. Composition de liant selon l'une quelconque des revendications 1 à 8, **caractérisé en ce que** la composition contient d'autres matières additionnelles, particulièrement des agents antiagglomérants, des agents antimousse, des émulsifiants, des colorants, des agents ignifugeants, des charges, des fongicides, des agents adhésifs, des agents imperméabilisants, des insecticides, des catalyseurs, des pigments, des agents rhéologiques, des agents épaississants, des agents de formation de film, des émollients et des réticulants additionnels.

10. Composition de liant selon l'une quelconque des revendications 1 à 9, **caractérisée en ce que** la différence entre le point de ramollissement du copolymère et le point de fusion ou de ramollissement du réticulant est généralement inférieure à 250°C, de préférence inférieure à 200°C, de manière plus préférée inférieure à 180°C.

11. Composition de liant selon l'une quelconque des revendications 1 à 10, **caractérisée en ce que** le module d'accumulation G' diminue initialement au moins une fois jusqu'à une valeur inférieure ou égale à 10⁸ Pa, de préférence inférieure ou égale à 10⁷ Pa, de manière plus préférée inférieure ou égale à 10⁶ Pa, pendant le chauffage entre 50°C et 300°C, de préférence entre 50°C et 250°C, de manière plus préférée entre 80°C et 250°C, et augmente de nouveau ensuite.

12. Procédé pour le liage de substrats fibreux et/ou granuleux, dans lequel une composition de liant sans formaldéhyde en poudre, selon l'une quelconque des revendications 1 à 11, est mélangée avec un substrat fibreux et/ou granuleux, et celui-ci est lié par l'intermédiaire, le cas échéant, de l'ajout d'au moins un catalyseur, de préférence avec augmentation de la température.

13. Procédé selon la revendication 12 **caractérisé en ce qu'**un catalyseur acide, de préférence de l'acide paratoluolsulfonique, ou un acide de Lewis, est utilisé comme catalyseur.

14. Procédé selon la revendication 12 ou 13, **caractérisé en ce que** le substrat fibreux et/ou granuleux est choisi dans la groupe incluant les fibres de laine de roche, les fibres minérales, les fibres de verre, les fibres de bois, les fibres de chanvre, les fibres de sisal, les fibres de jute, les fibres de lin, les fibres textiles, les fibres de laine, les fibres de coton, les fibres de cellulose et les fibres synthétiques, en particulier polyester et Nylon, les copeaux de bois, les granulés de liège, le sable, en particulier le sable de noyautage pour moules de fonte, les oxydes d'aluminium, en particulier les abrasifs.

15. Produits, corps moulés en particulier, pouvant être obtenus par le procédé selon l'une quelconque des revendications 12 à 14.

16. Utilisation d'une composition de liant en poudre selon l'une quelconque des revendications 1 à 11, comme liant pour des substrats fibreux et/ou granuleux.

17. Utilisation selon la revendication 16, **caractérisée en ce que** le substrat fibreux et/ou granuleux est choisi dans la groupe incluant les fibres de laine de roche, les fibres minérales, les fibres de verre, les fibres de bois, les fibres de chanvre, les fibres de sisal, les fibres de jute, les fibres de lin, les fibres textiles, les fibres de laine, les fibres de coton, les fibres de cellulose et les fibres synthétiques, en particulier polyester et Nylon, les copeaux de bois, les granulés de liège, le sable, en particulier le sable de noyautage pour moules de fonte, les oxydes d'aluminium, en particulier les abrasifs.
